# EUROPÄISCHE PATENTSCHRIFT

(11) **EP 2 172 659 B1**
(45) Veröffentlichungstag und Bekanntmachung des Hinweises auf die Patenterteilung: **05.10.2011**
(21) Anmeldenummer: 08017493.1
(22) Anmeldetag: 06.10.2008
(51) Int. Cl.: F16B 5/06

(54) **Befestigungselement**
Fastening element
Elément de fixation

(43) Veröffentlichungstag der Anmeldung: 07.04.2010
(73) Patentinhaber: Siemens Aktiengesellschaft, 80333 München (DE)
(72) Erfinder: Rester, Heribert, 92449 Steinberg am See (DE); Schwarz, Norbert, 90455 Nürnberg (DE)

(56) Entgegenhaltungen:
- EP-A- 1 617 128
- US-B1- 6 676 176

## Beschreibung

Die Erfindung betrifft ein Befestigungselement zum Einspannen einer Vorrichtung in einen Ausschnitt einer Fläche, wobei ein Randbereich der Vorrichtung zumindest teilweise auf einer Oberseite der Fläche aufliegt, umfassend ein Stützmittel und ein Haltemittel, wobei das Stützmittel zur Auflage auf eine Unterseite der Fläche ausgestaltet ist, und das Haltemittel zur Anordnung an die Vorrichtung ausgestaltet ist, wobei das Stützmittel und das Haltemittel derart zusammenwirken, dass die Vorrichtung in den Ausschnitt gespannt ist.

Mensch-Maschine-Schnittstellen auch HMI (Human-Machine-Interface) genannt, sind in der Regel als Bedienpanels, Bedienbildschirme, Touchscreens, Folientastaturen, Tastaturbretter, usw. ausgestaltet. Derartige flächige Bedienvorrichtungen, im Folgenden Vorrichtungen genannt, werden mittels Schraubspanner beispielsweise in einem Blechgehäuse eines Schaltschrankes befestigt. Auch ist der Einbau in ein flächiges Bedienpult mit solchen Bedienvorrichtungen vorgesehen. Bei Einsatz eines Schraubspanners, welcher zweiteilig ausgeführt ist, wobei ein Teil in ein Gehäuse der Vorrichtung eingehakt wird und ein weiterer Teil mittels eines Schraubgewindes durch den ersten Teil durchgeschraubt wird und einen Druck auf eine Unterseite des beispielsweise genannten Blechgehäuses ausübt, können die Vorrichtungen in die Fläche des Blechgehäuses oder in die Fläche eines Bedienpultes eingespannt werden. Die Vorrichtungen weisen dabei in der Regel einen rechteckförmigen Körper auf, wobei ein Randbereich der Vorrichtung kragenartig ausgestaltet ist und dadurch auf der Fläche aufliegt, so dass die Vorrichtung nicht durch den Ausschnitt hindurchrutschen kann.

Bei Einsatz der Schraubspanner kommt es vor, dass die Schrauben nicht mit einem vorgegebenen maximalen Drehmoment, beispielsweise 0,2 Nm, angezogen werden, da in der Regel bei dem Einbau der Vorrichtung geeignete Werkzeuge, beispielsweise Drehmoment-Schraubschlüssel, nicht zur Verfügung stehen. Beispielsweise kann eine metrische Schraube mit der Größe M4 mit ca. 3,0 Nm angezogen werden, was einem Faktor von 15 gegenüber dem maximal zulässigen Anzugsdrehmoment entspricht. Ein zu starkes Anziehen der Schrauben ist leicht möglich und kommt bei der täglichen Arbeit immer wieder vor. Bei einer Überschreitung des vorgeschriebenen maximalen Drehmomentes kommt es punktuell derart zu hohen Spannungen, dass infolge dessen die Vorrichtung nach einer gewissen Zeit brechen kann und Teile der Vorrichtung, beispielsweise der in der Vorrichtung eingebaute Touchscreen, einen signifikanten Schaden erfahren, beispielsweise Spannungsrisse in der Bildschirmoberfläche des Touchscreens. Auch kann ein Rahmen, welcher zuvor als Kragen der Vorrichtung bezeichnet wurde, Schaden- oder Rissbildung erleiden. Selbst eine geringe Verformung des Rahmens der Vorrichtung würde eine Undichtigkeit des eingebauten Bediensystems hervorrufen und es könnte zwischen dem Rahmen und der Einbaufläche Wasser oder Staub eindringen, welches nicht gewünscht ist. Da beispielsweise bei Schaltschränken zunehmend dünnere Gehäusebleche zum Einsatz kommen werden die genannten negativen Effekte noch weiter begünstigt.

Die EP 1 617 128 A2 offenbart eine lösbare Befestigungseinrichtung gemäß dem Oberbegriff des Anspruchs 1, bei welcher eine Spannkraft mittels eines um eine Drehachse schwenkbaren Armes erzeugt wird, wobei der Arm und ein "Shaft" zum Erzeugen der Spannkraft ein ineinander greifendes Profil aufweisen. Hierbei ist es von Nachteil, dass mit dem Arm eine 90° Schwenkbewegung ausgeführt werden muss, welches bei beengten Platzverhältnissen nicht möglichst ist.

Die US 6 676 176 B1 offenbart ein Befestigungsmittel, welches durch eine zusätzliche Bohrung der Fläche eines Einbauausschnitts geführt werden muss. Die zusätzliche Bohrung hat den Nachteil, dass eine zusätzliche Schwachstelle für eintretende Feuchtigkeit entsteht.

Es ist die Aufgabe der Erfindung ein Befestigungselement bereitzustellen, welches beim Einbau einer Vorrichtung in eine Fläche eine maximal entstehende Spannkraft nicht überschreitet und die aufgezeigten Nachteile überwindet.

Die Aufgabe wird für das eingangs genannte Befestigungselement durch die Merkmalskombination des Anspruchs 1 gelöst. Bei dem Befestigungselement wird im Gegensatz zum Stand der Technik die Spannkraft nicht mehr durch eine Schraube erzeugt, sondern durch ein elastisches Element. Die Kraft die nun durch das Stützmittel auf die Unterseite der Fläche, also auch auf den Rahmen, wirkt, ist nun durch das elastische Element vorgegeben. Eine Überschreitung der zulässigen Kraft ist durch das erfindungsgemäße Befestigungselement nicht möglich. Auch Spannungsspitzen, die z.B. durch Verzug eines Blechausschnittes, in die die Vorrichtung eingespannt werden soll, werden durch das elastische Element ausgeglichen.

Dabei ist das Stützmittel mit einem ersten Schenkel, einem zweiten Schenkel und mit einem Basisteil ausgestaltet und bildet dabei eine u-Form. Das Basisteil des Stützmittels ist vorzugsweise, im Gegensatz zu einem Schraubspanner flächig ausgestaltet. Das Basisteil überträgt die Kraft nicht punktuell auf einen Blechausschnitt sondern die Kraft wird über die Fläche des Basisteils auf das Blech eingeleitet, als Vorteil ergibt sich eine gleichmäßige Kraftverteilung.

Das Haltemittel umfasst einen Flansch, ein Oberteil und ein Unterteil, wobei das Oberteil und das Unterteil am Flansch angeordnet sind. Durch diese Ausgestaltung bekommt das Haltemittel eine gehäuseartige Form, welches im Inneren das Stützmittel führen kann.

Für die Führung ist es von Vorteil, dass in dem ersten und in dem zweiten Schenkel das erste Führungsmittel als eine in den Schenkeln längs erstreckte Nut ausgestaltet ist. Durch eine längs erstreckte Nut entsteht eine gleitschienenartige Führung, welche im Inneren des Haltemittels ein entsprechendes Gegenstück findet, wobei das Haltemittel auf dem Stützmittel verschiebbar ist und durch die Führungsmittel eine sichere Führung erfährt ohne dass ein Verrutschen des Haltemittels zu dem Stützmittel in seitlicher Richtung auftreten kann.

Das Oberteil und das Unterteil sind derart ausgestaltet, dass die Schenkel des Stützmittels zwischen dem Oberteil und dem Unterteil parallel zu einer Symmetrieachse des Flansches angeordnet sind. Das Befestigungsmittel bildet in seiner zweiteiligen Ausführung mit Stützmittel und Haltemittel vorzugsweise eine bauliche Einheit, wobei das Stützmittel und das Haltemittel derart Zusammenwirken, dass sie zwar gegeneinander verschiebbar sind aber das Haltemittel von dem Stützmittel bzw. das Stützmittel von dem Haltemittel unverlierbar ist.

Nach einer weiteren vorteilhaften Ausgestaltung ist das elastische Element mit einem ersten Ende zum Basisteil und mit einem zweiten Ende zum Flansch hin angeordnet. Durch diese Anordnung des elastischen Elementes kann zwischen dem Stützmittel und dem Haltemittel parallel zu der Symmetrieachse des Flansches eine gerichtete Spannkraft erzeugt werden. Diese Spannkraft sorgt dafür, dass das Stützmittel das bestreben hat, sich aus dem Haltemittel herauszuschieben.

Um dem zuvor genannten Verschiebungsvorgang Einhalt zu gebieten, hat der erste Schenkel und der zweite Schenkel jeweils einen Anschlag. Die Anschläge an den Schenkeln des Stützmittels liegen im nicht eingebauten Zustand des Befestigungsmittels auf entsprechenden Widerlagern des Haltemittels auf.

Damit auch das innerhalb des Haltemittels und des Stützmittels angeordnete elastische Elemente eine sichere Führung erfährt, ist es vorteilhaft, dass das Basisteil mit Mitteln zum Fixieren des elastischen Elementes ausgestaltet ist.

Die durch das elastische Element erzeugte Spannkraft, welche über das Basisteil auf die Unterseite der Fläche wirkt erfährt durch eine am Unterteil angeordnete Rastnase, welche vorzugsweise in ein Rastgitter der Vorrichtung eingehakt wird, eine entsprechende Gegenkraft.

Um den Einbau des Befestigungselements zu erleichtern ist der Flansch mit einer ersten Druckfläche zum Runterdrücken des Halteteiles entgegen der Spannkraft ausgestaltet. Die Druckfläche ist vorzugsweise als eine muldenartige Form mit konzentrisch eingebrachten Griffriffeln ausgestaltet.

Für das Lösen eines bereits eingebauten Befestigungselementes ist es vorteilhaft, dass das Oberteil mit einem Schlitz als Angriffspunkt für ein Werkzeug zum Lösen der Befestigung ausgestaltet ist. Über das Einbringen des Werkzeuges in den Schlitz, beispielsweise mit einem Schraubendreher, kann ein Hebelmoment erzeugt werden, welches das Befestigungselement dazu bringt aus seiner Befestigungsposition herausgeschwenkt zu werden und dabei die Spannkraft nicht mehr auf die Unterseite der Fläche wirkt.

Für einen erleichterten Einbau des Befestigungselementes ist es von Vorteil, dass die Rastnase derart ausgestaltet ist, das nach einem Eintauchen der Rastnase in eine Rastöffnung der Vorrichtung und einen darauffolgenden Einschwenken des Befestigungselementes, dass das Befestigungselement sicher geführt ist.

Bei einer besonders bevorzugten Ausgestaltung ist das elastische Element als eine Schraubenfeder ausgestaltet. Ebenso denkbar ist auch ein zusammendrückbares Kunststoffelement, ein Federelement welches als Flachstahl ausgebildet ist, ein pneumatisches Druckelement oder generell jedes Material, welches beim Zusammendrücken eine entsprechende Spannkraft aufbaut.

Wird das Befestigungselement bei den beispielsweise bereits genannten Schaltschränken eingesetzt und die Schaltschränke herstellbedingt oder einsatzbedingt verschieden starke Blechstärken aufweisen, so weist das Stützmittel des Befestigungselementes in einer vorteilhaften Ausgestaltung entfernbare Distanzmittel auf. Die Distanzmittel sind dabei an der Fläche des Basisteiles des Stützmittels angeordnet. Dabei weisen die Distanzmittel, welche beispielsweise als zwei Füße ausgebildet sind, Sollbruchstellen auf. Diese Sollbruchstellen dienen dem einfachen Abtrennen der Distanzmittel von der Fläche des Basisteils des Stützmittels im Falle, dass beispielsweise ein Schaltschrank mit einer Blechtüre, welche eine erhöhte Dicke aufweist, eingesetzt werden soll.

Weitere Vorteile und Ausführungsbeispiele des erfindungsgemäßen Befestigungselementes werden anhand der Zeichnungen und der dazugehörigen Beschreibungen erläutert. Es zeigen:
- FIG 1: ein Befestigungselement in einer perspektivischen An- sicht mit einer Sicht auf ein erstes und ein zweites Rasthakenpaar,
- FIG 2: das Befestigungselement aus FIG 1 in einer perspekti- vischen Ansicht auf eine Seite welche dem Rasthaken- paar gegenüberliegt,
- FIG 3: ein Befestigungselement in einer perspektivischen An- sicht mit einem modifizierten Stützmittel,
- FIG 4: ein Befestigungselement in einer Einbaulage an einer Vorrichtung und
- FIG 5: ein Befestigungsmittel in einer Einbaulage gezeigt anhand einer Schnittdarstellung eines HMI-Panels.

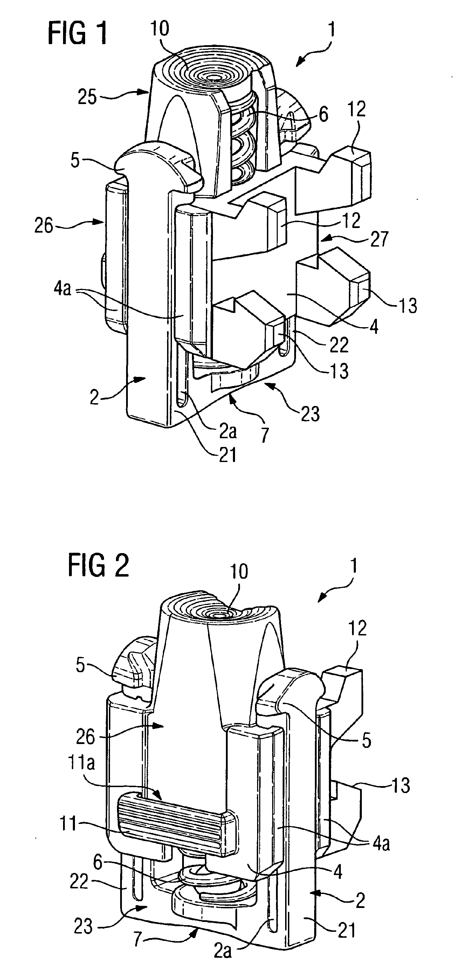

Gemäß FIG 1 ist ein Befestigungselement 1 als ein Schnellspanner in einer perspektivischen Ansicht auf ein erstes Rasthakenpaar 12 und ein zweites Rasthakenpaar 13, welche auf einem Unterteil 27 eines Haltemittels 4 angeordnet sind, dargestellt. Das Haltemittel 4 umfasst einen Flansch 25, das Unterteil 27 und ein Oberteil 26. Das Oberteil 26 und das Unterteil 27 sind parallel zueinander längs einer Symmetrieachse des Flansches am Flansch 25 angeordnet. Das Haltemittel 4 steht mit einem Stützmittel 2 in einer verschiebbaren, aber unverlierbaren Verbindung. Das Stützmittel 2 umfasst einen ersten Schenkel 21, einen zweiten Schenkel 22 und ein Basisteil 23, wobei der erste und zweite Schenkel 21,22 mit dem Basisteil 23 eine u-Form bilden.

Das Oberteil 26 und das Unterteil 27 des Haltemittels 2 sind derart ausgestaltet, dass die Schenkel 21, 22 jeweils zwischen dem Oberteil 26 und dem Unterteil 27 geführt werden können. Für eine sichere Führung weisen der erste und der zweite Schenkel 21, 22 je ein erstes Führungsmittel 2a auf. Das erste Führungsmittel 2a ist in Form einer sich in den Schenkeln längs erstreckenden Nut ausgestaltet. Dementsprechend ist im Inneren des Oberteils 26 und des Unterteils 27 eine für die Nut passend ausgestaltete Führungsfeder angeordnet.

Der erste Schenkel 21 und der zweite Schenkel 22 werden über zweite Führungsmittel 4a, welche jeweils an dem Oberteil 26 und an dem Unterteil 27 angeordnet sind, geführt.

Zum Erzeugen einer Spannkraft, welche dafür sorgt, dass das Haltemittel 4 von dem Stützmittel 2 weggeschoben wird, ist im Inneren des Haltemittels 4 eine Schraubenfeder 6 angeordnet. Ein erstes Ende der Schraubenfeder 6 ist zum Basisteil 23 hin angeordnet und ein zweites Ende der Schraubenfeder 6 ist zum Flansch 25 hin angeordnet. Der Flansch 25 ist als zylindrischer Flansch ausgestaltet mit einem Durchmesser, welcher ein wenig größer ist als der Durchmesser der Schraubenfeder 6. Das zweite Ende der Schraubenfeder 6 liegt mit einem sicheren Halt im Inneren des zylindrischen Flansches 25.

Wird durch einen Druck mit einem Finger auf die erste Druckfläche 10 des Haltemittels 4 ein Druck parallel zur Symmetrieachse des Flansches 25 ausgeübt, so wird die Schraubenfeder 6 zusammengepresst und das Haltemittel 4 bzw. das Stützmittel 2 verschieben sich relativ zueinander. Dabei löst sich ein Anschlag 5 des ersten Schenkels 21 von einem Widerlager des Haltemittels 2. Der Anschlag 5 dient dazu, dass das Stützmittel 2 nicht gänzlich von dem Haltemittel 4 abgleitet.

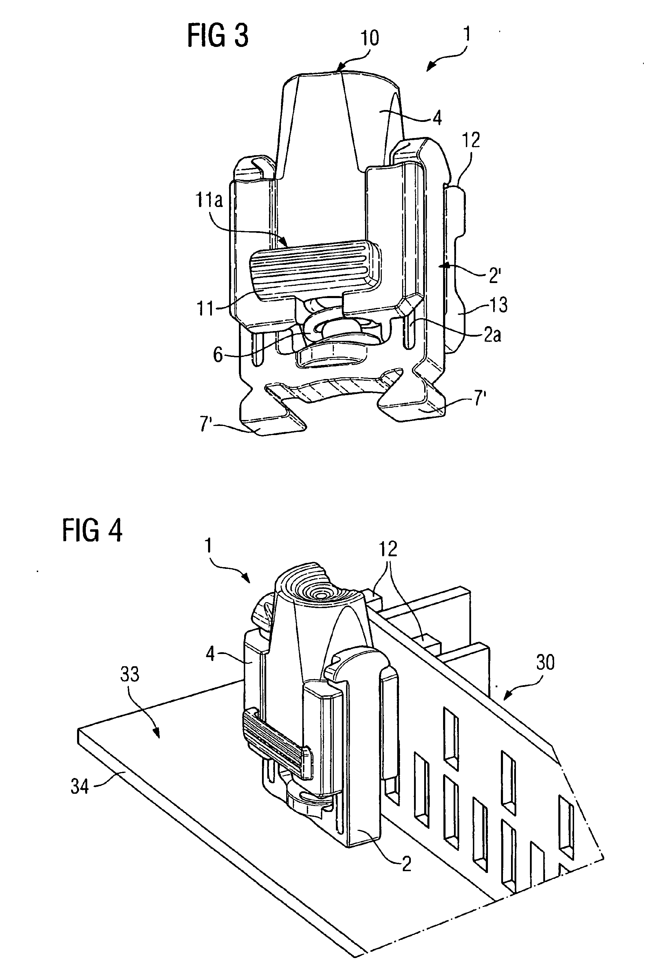

Um nun eine Vorrichtung 30, beispielsweise eine Bedienfront mit einem Rahmen in eine Fläche einzuspannen, werden das erste Rasthakenpaar 12 und das zweite Rasthakenpaar 13 mit der Vorrichtung 30 verankert. Ein Beispiel für eine Verankerung des Befestigungselementes 1 mit einer Vorrichtung 30 ist in FIG 4 gezeigt.

FIG 2 zeigt das bereits zuvor mit FIG 1 beschriebene Befestigungselement 1 in einer anderen perspektivischen Ansicht. Die Ansicht ist nunmehr auf das Oberteil 26 des Haltemittels 4 gerichtet. Das Oberteil 26 weist eine zweite Druckfläche 11 auf. Die zweite Druckfläche 11 ist eine rechteckförmige Ausformung aus dem Oberteil 26 und liegt rechtwinklig zur Symmetrieachse des Flansches 25. Um die Griffigkeit der zweiten Druckfläche 11 zu erhöhen, sind Längsriefen in die rechteckförmige Ausformung eingeschliffen. Um weiterhin mit einem Werkzeug, beispielsweise einem Schraubendreher, auf das Haltemittel 4 Druck auszuüben, ist in dem Oberteil 26 nahe der zweiten Druckfläche 11 ein Schlitz 11a angeordnet. In diesem Schlitz 11a kann der Schraubenzieher eingeführt werden und es kann ohne Abrutschen das Halteteil 4 heruntergedrückt werden und somit die Schraubenfeder 6 gespannt werden. Am Basisteil 23 ist im Inneren der u-Form ein Mittel zum Fixieren der Feder auf dem Basisteil 23 angeordnet. Das Mittel zum Fixieren der Schraubenfeder ist hierbei als eine Warze ausgestaltet, welche teilweise in das erste Ende der Schraubenfeder eintaucht und ein Verrutschen verhindert.

Gemäß FIG 3 ist das Befestigungselement 1 mit einem modifizierten Stützmittel 2' dargestellt. Das modifizierte Stützmittel 2' weist als Besonderheit eine modifizierte Stützfläche 7' auf. Die modifizierte Stützfläche 7' besteht aus zwei Füßen mit ausreichender verbleibender Stützfläche und mit ausreichender Stabilität zum Stützmittel 2'. Die Füße sind mit einer Sollbruchstelle zum Stützmittel 2' angeordnet und können daher bedarfsweise abgetrennt werden. Dieser Bedarf entsteht wenn beispielsweise das Befestigungsmittel 1 zuvor für einen Einbau einer Bedienoberfläche in einen Schaltschrank, wobei der Schaltschrank bzw. die Schaltschranktür eine Blechstärke von 2 mm aufweist, und der Schaltschrank aufgrund von Umbaumaßnahmen ausgetauscht wird und nunmehr eine Blechstärke in der Schaltschranktür von 7 mm aufweist. Das Befestigungsmittel 1 kann durch diese entfernbaren Distanzmittel, sprich die abtrennbaren Füße, für den geänderten Einbau unproblematisch angepasst werden.

Gemäß FIG 4 ist eine Einbaulage des Befestigungselementes 1 abgebildet. Die Vorrichtung 30 ist wiederum beispielsweise ein HMI-Gerät mit einem gitterförmigen Kasten in den ein Touchscreen eingebaut ist und der Touchscreen mittels eines Rahmens zusätzlich befestigt ist. Dieser Rahmen wird auf das Gehäuseblech 34 aufgelegt, dabei tritt der gitterförmige Aufbau der Vorrichtung 30 durch den Ausschnitt hindurch. Das Stützmittel 2 stützt sich auf der Unterseite 33 des Gehäusebleches 34 ab. Das in FIG 1 bereits erläuterte Rasthakenpaar 12 ist in die gitterförmigen Rastöffnungen der Vorrichtung 30 eingeführt und kann dementsprechend, die mittels der Schraubenfeder 6 aufgebaute Spannkraft, auf die Vorrichtung 30 übertragen. Dadurch, dass sich das Stützmittel 2 gegen die Unterseite 33 des Gehäusebleches 34 abstützt und die Rasthakenpaare 12 und 13 die Vorrichtung in diesen Ausschnitt hineinspannen, ist die Vorrichtung 30 sicher gehalten.

Den Einbau des Befestigungselementes 1 an eine Vorrichtung 30 und an ein Gehäuseblech 34 muss man sich folgendermaßen vorstellen: Das Befestigungselement 1, ausgelegt als Schnellspanner, wird in einen Winkel von ca. 30°C an das Gehäuse der Vorrichtung 30 angelegt. Dabei tauchen das erste Rastnasenpaar 12 bereits in die entsprechenden Rastöffnungen der Vorrichtung ein. Eine Geometrie der oberen Rastnasen des ersten Rastnasenpaares 12 ist dabei so ausgelegt, dass der Schnellspanner beim darauffolgenden gänzlichen Einschwenken nicht weggleiten kann. Hierzu ist in einem Eckpunkt der Rastnasen eine Schrägfläche angeordnet. Wird der Schnellspanner in Richtung Rahmen geschwenkt so baut sich zunehmend die Spannkraft mittels der Schraubenfeder 6 auf. Steht der Schnellspanner nun mit seiner Symmetrieachse nahezu senkrecht auf der Unterseite 33 des Gehäusebleches 34, schnappen auch die unteren Rastnasen des Rastnasenpaares 13 in die dazugehörigen Rastöffnungen der Vorrichtung 30 ein. Durch die Federkraft der Schraubenfeder 6 wird der Schnellspanner mit einer definierten Spannkraft in Position gehalten. Zum Lösen wird der Schnellspanner mit der Hand oder mit einem Schraubendreher an den vorgesehenen Stellen nach unten gedrückt bis man ihn durch Wegschwenken von der Vorrichtung 30 lösen kann.

Für die Materialausführung eines solchen Schnellspanners sind verschiedene Materialien möglich, z.B. Kunststoff, Aluminium oder Zink. Durch das modifizierte Stützmittel 2' mit seiner modifizierten Stützfläche 7' ist durch Bedarfsweise abbrechen der Füße eine Anpassung auf verschieden starke Blechstärken möglich. Durch die Verwendung verschieden starker Schraubenfedern lässt sich der Schnellspanner auf eine jeweils geforderte Spannkraft einstellen.

Als besonders vorteilhaft wird hieran gesehen, dass nunmehr mit dem Schnellspanner eine zu hohe Spannkraft, wie sie mit dem Schraubenspanner nach dem Stand der Technik entstehen konnte, nicht mehr auftritt.

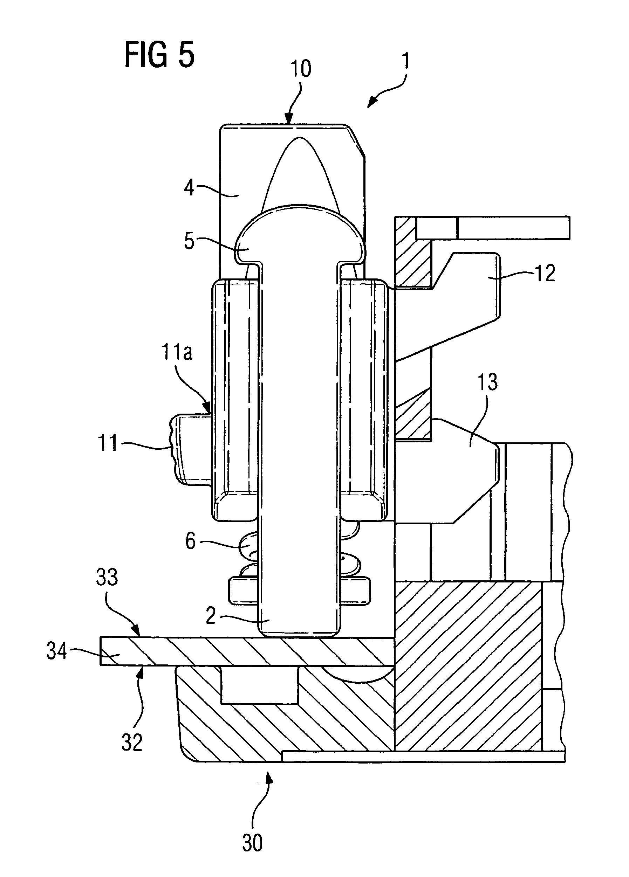

FIG 5 verdeutlicht die gemäß FIG 4 beschriebene Einbaulage anhand einer Vorrichtung 30, welche beispielsweise als ein Industrie-PC, ausgeführt als ein Panel-PC, in eine Schaltschranktür mit einem Gehäuseblech 34 und einer Oberseite 32 und einer Unterseite 33 eingebaut ist. Der Panel-PC weist neben seinem rechteckförmigen Hauptkörper, welcher in der Regel als Industriecomputer ausgestaltet ist, einen Aluminiumdruckgußrahmen auf. Dieser Aluminiumdruckgußrahmen verläuft im Rechteck einmal um den Industriecomputer herum und trägt zusätzlich einen Touchscreen zum gleichzeitigen Bedienen und Beobachten von industriellen Prozessen. Der erwähnte Rahmen liegt dabei auf der Oberseite 32 des Gehäusebleches 34. In dem Rahmen ist eine rechteckförmige umlaufende Aussparung eingefügt, diese dient zur Aufnahme einer Dichtung. Auf die Unterseite 33 des Gehäusebleches 34 stützt sich das Haltemittel 2 des Schnellspanners ab. Die Schraubenfeder 6 erzeugt dabei die entsprechende Spannkraft und treibt gleichzeitig das Haltemittel 4 von der Unterseite 33 weg. Da das Befestigungselement 1, also der Schnellspanner, mit seinem ersten Rasthakenpaar 12 und seinem zweiten Rasthakenpaar 13 in die entsprechenden Gitteröffnungen des Gehäuses des Panel-PC's eingehakt ist und die damit ein entsprechendes Widerlager erfahren, wird der Panel-PC sicher in den Ausschnitt der Einbauöffnung des Gehäusebleches 34 eingespannt und die zuvor erwähnte Dichtung wird dementsprechend gestaucht, so dass eine Dichtigkeit zwischen der Oberseite 32 und dem Rahmen des Panel-PC erreicht wird. Ein Eindringen von Feuchtigkeit über die Oberseite 32 des Gehäusebleches 34 in den Panel-PC wird somit verhindert.

Spannungsspitzen, welche z.B. durch Verzug des Ausschnittes des Gehäusebleches 34 aufgrund von Temperatureinwirkungen entstehen können, werden durch die Schraubenfedern 6 in den Schnellspannern ausgeglichen.

## Patentansprüche

1. Befestigungselement (1) zum Einspannen einer Vorrichtung (30) in einen Ausschnitt einer Fläche, wobei ein Randbereich (31) der Vorrichtung (30) zumindest teilweise auf einer Oberseite (32) der Fläche aufliegt, umfassend ein Stützmittel (2) und ein Haltemittel (4), wobei das Stützmittel (2) zur Auflage auf eine Unterseite (33) der Fläche ausgestaltet ist, und das Haltemittel (4) zur Anordnung an die Vorrichtung (30) ausgestaltet ist, wobei das Stützmittel (2) und das Haltemittel (4) derart zusammenwirken, dass die Vorrichtung (30) in den Ausschnitt gespannt ist, wobei das Stützmittel (2) ein erstes Führungsmittel (2a) und das Haltemittel (4) ein zweites Führungsmittel (4a) aufweist, wobei die Führungsmittel (2a,4a) zum verschiebbaren Zusammenhalt von Haltemittel (4) und Stützmittel (2) ausgestaltet sind, **dadurch gekennzeichnet, dass** das Stützmittel (2) einen ersten Schenkel (21), einen zweiten Schenkel (22) und ein Basisteil (23) umfasst und u-förmig ausgestaltet ist und zwischen Stützmittel (2) und Haltemittel (4) ein elastisches Element zum Erzeugen einer Spannkraft angeordnet ist, wobei das Haltemittel (4) einen Flansch (25), ein Oberteil (26) und ein Unterteil (27) umfasst, wobei das Oberteil (26) und das Unterteil (27) am Flansch (25) angeordnet sind, wobei das Oberteil (26) und das Unterteil (27) derart ausgestaltet sind, dass die Schenkel (21,22) des Stützmittels (2) zwischen dem Oberteil (26) und dem Unterteil (27) parallel zu einer Symmetrieachse des Flansches (25) angeordnet sind, und am Unterteil (26) eine Rastnase angeordnet ist, wobei die Rastnase derart ausgestaltet ist, dass nach einem Eintauchen der Rastnase in eine Rastöffnung der Vorrichtung und einem darauf folgenden Einschwenken das Befestigungselement (1) sicher geführt ist.

2. Befestigungselement (1) nach Anspruch 1, wobei in dem ersten und zweiten Schenkel (21,22) das erste Führungsmittel (2a) als eine in den Schenkeln (21,22) längs erstreckte Nut ausgestaltet ist.

3. Befestigungselement (1) nach einem der Ansprüche 1 oder 2, wobei das elastische Element mit einem ersten Ende zum Basisteil (23) und mit einem zweiten Ende zum Flansch (25) hin angeordnet ist.

4. Befestigungselement (1) nach einem der Ansprüche 1 bis 3, wobei der erste Schenkel (21) und der zweite Schenkel (22) jeweils einen Anschlag (5) aufweisen.

5. Befestigungselement (1) nach einem der Ansprüche 1 bis 4, wobei das Basisteil (23) mit Mitteln zum Fixieren des elastischen Elementes ausgestaltet ist.

6. Befestigungselement (1) nach einem der Ansprüche 1 bis 5, wobei der Flansch (25) mit einer ersten Druckfläche (10) zum Runterdrücken des Halteteils (4) entgegen der Spannkraft ausgestaltet ist.

7. Befestigungselement (1) nach einem der Ansprüche 1 bis 6, wobei das Oberteil (26) mit einem Schlitz (11a) als Angriffspunkt für ein Werkzeug zum Lösen und Runterdrücken der Befestigung ausgestaltet ist.

8. Befestigungselement (1) nach einem der Ansprüche 1 bis 7, wobei das elastische Element als eine Schraubenfeder (6) ausgestaltet ist.

9. Befestigungselement (1) nach einem der Ansprüche 1 bis 8, wobei das Stützmittel (2,2') bedarfsweise entfernbare Distanzmittel aufweist.

## Claims

1. Fastening element (1) for clamping a device (30) into a cutout in a surface, wherein an edge region (31) of the device (30) rests at least partially on a top side (32) of the surface, comprising a supporting means (2) and a retaining means (4), wherein the supporting means (2) is designed to rest on an underside (33) of the surface, and the retaining means (4) is designed to be arranged on the device (30), wherein the supporting means (2) and the retaining means (4) interact such that the device (30) is clamped in the cutout, wherein the supporting means (2) has a first guide means (2a) and the retaining means (4) has a second guide means (4a), wherein the guide means (2a, 4a) are designed to hold the retaining means (4) and the supporting means (2) together in a displaceable manner, **characterized in that** the supporting means (2) comprises a first limb (21), a second limb (22) and a base part (23) and is designed in the form of a U, and between the supporting means (2) and the retaining means (4) there is arranged an elastic element for producing a clamping force, wherein the retaining means (4) comprises a flange (25), an upper part (26) and a lower part (27), wherein the upper part (26) and the lower part (27) are arranged on the flange (25), wherein the upper part (26) and the lower part (27) are designed such that the limbs (21, 22) of the supporting means (2) are arranged between the upper part (26) and the lower part (27) in a manner parallel to an axis of symmetry of the flange (25), and a latching nose is arranged on the lower part (26), wherein the latching nose is designed such that, following penetration of the latching nose into a latching opening in the device and a subsequent pivoting-in movement, the fastening device (1) is guided securely.

2. Fastening element (1) according to Claim 1, wherein in the first and second limbs (21, 22) the first guide means (2a) is designed as a groove that extends longitudinally in the limbs (21, 22).

3. Fastening element (1) according to either of Claims 1 and 2, wherein the elastic element is arranged with a first end oriented in the direction of the base part (23) and with a second end oriented in the direction of the flange (25).

4. Fastening element (1) according to one of Claims 1 to 3, wherein the first limb (21) and the second limb (22) each have a stop (5).

5. Fastening element (1) according to one of Claims 1 to 4, wherein the base part (23) is designed with means for fixing the elastic element.

6. Fastening element (1) according to one of Claims 1 to 5, wherein the flange (25) is designed with a first pressure-exerting surface (10) for pressing drown the retaining part (4) counter to the clamping force.

7. Fastening element (1) according to one of Claims 1 to 6, wherein the upper part (26) is designed with a slot (11a) as point of engagement for a tool for releasing and pressing drown the fastening.

8. Fastening element (1) according to one of Claims 1 to 7, wherein the elastic element is designed as a helical spring (6).

9. Fastening element (1) according to one of Claims 1 to 8, wherein the supporting means (2, 2') has spacers that can be removed if required.

## Revendications

1. Elément ( 1 ) de fixation pour encastrer un dispositif ( 30 ) dans une découpure d'une surface, une zone de bord du dispositif ( 30 ) s'appliquant au moins sur une face ( 32 ) supérieure de la surface, comprenant un moyen ( 2 ) d'appui et un moyen ( 4 ) de maintien, le moyen ( 2 ) d'appui étant conformé pour s'appliquer sur une face ( 33 ) inférieure de la surface et le moyen ( 4 ) de maintien étant conformé pour se monter sur le dispositif ( 30 ) le moyen ( 2 ) d'appui et le moyen ( 4 ) de maintien coopérant de manière à bloquer le dispositif ( 30 ), dans la découpure, les moyens ( 2 ) d'appui ayant un premier moyen ( 2a ) de guidage et le moyen ( 4 ) de maintien ayant un deuxième moyen ( 4a ) de guidage, les moyens ( 2a, 4a ) de guidage étant conformés pour tenir ensemble en coulissement, **caractérisé en ce que** le moyen ( 2 ) d'appui comprend une première branche ( 21 ), une deuxième branche ( 22 ) et une partie ( 23 ) de base et est en forme de u et un élément élastique pour la production d'une force de serrage est disposé entre le moyen ( 2 ) d'appui et le moyen ( 4 ) de maintien, dans lequel le moyen ( 4 ) de maintien comprend un flasque ( 25 ) une partie ( 26 ) supérieure et une partie ( 27 ) inférieure, la partie ( 26 ) supérieure et la partie ( 27 ) inférieure étant disposées sur le flasque ( 25 ), la partie ( 26 ) supérieure et la partie ( 27 ) inférieure étant conformées de manière à ce que les branches ( 21, 22 ) du moyen ( 2 ) d'appui soient disposées entre la partie ( 26 ) supérieure et la partie ( 27 ) inférieure, parallèlement à un axe de symétrie du flasque ( 25 ), et il est disposé un bec d'encliquetage à la partie ( 26 ) inférieure, le bec d'encliquetage étant conformé de manière à ce qu'après une pénétration du bec d'encliquetage dans une ouverture d'encliquetage du dispositif et un basculement qui s'ensuit, l'élément ( 1 ) de fixation soit guidé de manière sûre.

2. Elément ( 1 ) de fixation suivant la revendication 1, dans lequel dans la première et la deuxième branche ( 21, 22 ), le premier moyen ( 2a ) de guidage est conformé sous la forme d'une rainure s'étendant longitudinalement dans les branches ( 21, 22 ).

3. Elément ( 1 ) de fixation suivant l'une des revendications 1 ou 2, dans lequel l'élément élastique est disposé par une première extrémité vers la partie ( 23 ) de base et par une deuxième extrémité vers le flasque ( 25 ).

4. Elément ( 1 ) de fixation suivant l'une des revendications 1 à 3, dans lequel la première branche ( 21 ) et la deuxième branche ( 22 ) ont respectivement une butée ( 5 ).

5. Elément ( 1 ) de fixation suivant l'une des revendications 1 à 4, dans lequel la partie ( 23 ) de base est conformée en ayant des moyens d'immobilisation de l'élément élastique.

6. Elément ( 1 ) de fixation suivant l'une des revendications 1 à 5, dans lequel le flasque ( 25 ) est conformé par une première surface ( 10 ) d'application d'une pression pour repousser vers le bas la partie ( 4 ) de maintien à l'encontre de la force de serrage.

7. Elément ( 1 ) de fixation suivant l'une des revendications 1 à 6, dans lequel la partie ( 6 ) supérieure est conformée en ayant une fente ( 11 ) comme point d'attaque d'un outil pour défaire la fixation et la repousser vers le bas.

8. Elément ( 1 ) de fixation suivant l'une des revendications 1 à 7, dans lequel l'élément élastique est constitué sous la forme d'un ressort ( 6 ) hélicoïdal.

9. Elément ( 1 ) de fixation suivant l'une des revendications 1 à 8, dans lequel le moyen ( 2, 2' ) d'appui a des moyens d'entretoisement pouvant être retirés en cas de besoin.
